# EUROPÄISCHE PATENTSCHRIFT

(11) **EP 2 994 985 B1**
(45) Veröffentlichungstag und Bekanntmachung des Hinweises auf die Patenterteilung: **09.10.2019**
(21) Anmeldenummer: 14719272.8
(22) Anmeldetag: 17.04.2014
(51) Int. Cl.: H02M 1/38

(54) **STEUERUNG EINER HALBBRÜCKE**
HALFBRIDGE CONTROLLER
COMMANDE D'UN CIRCUIT DEMI-PONT

(30) Priorität: 08.05.2013 DE 102013208574
(43) Veröffentlichungstag der Anmeldung: 16.03.2016
(73) Patentinhaber: Robert Bosch GmbH, 70442 Stuttgart (DE)
(72) Erfinder: SCHULZE-ICKING-KONERT, Georg, 77830 Buehlertal (DE); FORSCHT, Michael, 77767 Appenweier (DE)
(86) Internationale Anmeldenummer: PCT/EP2014/057847
(87) Internationale Veröffentlichungsnummer: WO 2014/180644

(56) Entgegenhaltungen:
- US-A1- 2006 152 204

## Beschreibung

Die vorliegende Erfindung betrifft eine Steuerung einer Halbbrücke zur Ansteuerung eines elektrischen Verbrauchers. Insbesondere betrifft die Erfindung die Optimierung einer zeitlichen Abfolge von Schaltzuständen an der Halbbrücke.

### Stand der Technik

Zur Steuerung eines elektrischen Verbrauchers, beispielsweise eines Elektromotors oder einer elektrischen Heizung, kann eine Brückenschaltung mit einer Halbbrücke verwendet werden. Die Halbbrücke umfasst eine erste Schalteinrichtung zur Verbindung eines Anschlusses mit einem ersten Potential und eine zweite Schalteinrichtung zur Verbindung des Anschlusses mit einem zweiten Potential. Der Verbraucher wird zwischen dem Anschluss und einem geeigneten Potential betrieben. Dieses Potential kann fest gewählt sein oder mittels einer weiteren Halbbrücke gesteuert sein. Dabei können die beiden Halbbrücken dem Verbraucher jeweils zueinander komplementäre Potentiale bereitstellen, so dass eine Stromrichtung durch den Verbraucher durch die Ansteuerung der Halbbrücken steuerbar ist.

Die Schalteinrichtungen der Halbbrücke müssen so geschaltet werden, dass nicht beide Schalteinrichtungen gleichzeitig geschlossen sind. Anderenfalls würde ein hoher Kurzschlussstrom durch die Schaltelemente fließen, wodurch die Schaltelemente beschädigt oder zerstört werden können. Dabei ist zu beachten, dass falls eine Schalteinrichtung als Feldeffekttransistor ausgeführt ist, diese Schalteinrichtung selbst im ausgeschalteten Zustand Strom in einer Richtung durchlassen kann. Um den Kurzschlussstrom durch die Schalteinrichtungen zu vermeiden wird daher zwischen dem Öffnen einer der Schalteinrichtungen und dem Schließen einer anderen Schalteinrichtung üblicherweise eine vorbestimmte Totzeit eingefügt, während derer keine der Schalteinrichtungen geschlossen ist. Diese Totzeit wird üblicherweise anhand von Worst-Case-Berechnungen und einem Sicherheitszuschlag bestimmt.

US 2006/152204 A1 schlägt vor, einen Aufwärtswandler für Gleichspannung derart zu betreiben, dass eine Totzeit von Schaltelementen möglichst minimiert ist.

Je länger die Totzeit ist, desto größer kann eine Verlustleistung an der Halbbrücke ausfallen. Ist die Schalteinrichtung geöffnet, so bestimmt sich die Verlustleistung als Produkt aus dem fließenden Strom und der über der Schalteinrichtung abfallenden Spannung. Im Fall eines Feldeffekttransistors können der Strom im Bereich von 10A und die abfallende Diodenspannung bei ca. einem Volt liegen. Während einer Totzeit von ca. einer Mikrosekunde beträgt die Verlustleistung daher ca. 10µJ. Im geschlossenen Zustand beträgt die Verlustleistung der Schalteinrichtung das Produkt aus dem Quadrat des fließenden Stroms und des Durchlasswiderstandes, wobei letzterer bei einem Feldeffekttransistor im Bereich von ca. 6mΩ liegen kann. Bei einer Pulsweitenmodulation mit einer Periodendauer von 50µs beträgt die Verlustleistung daher außerhalb der Totzeit ca. 30µJ. Obwohl die Totzeit nur ca. 2% der Periodendauer beträgt, hat sie demnach einen Anteil von ca. 30% an der Verlustleistung.

Es ist daher Aufgabe der Erfindung, ein Verfahren, ein Computerprogrammprodukt und eine Steuereinrichtung zur Steuerung einer Halbbrücke anzugeben, so dass die Verlustleistung verringert wird. Die Erfindung löst diese Aufgaben mittels eines Verfahrens, eines Computerprogrammprodukts und einer Steuereinrichtung mit den Merkmalen der unabhängigen Ansprüche. Unteransprüche geben bevorzugte Ausführungsformen wieder.

### Offenbarung der Erfindung

Eine Halbbrücke umfasst eine erste Schalteinrichtung zur Verbindung eines Anschlusses mit einem ersten Potential und eine zweite Schalteinrichtung zur Verbindung des Anschlusses mit einem zweiten Potential. Ein erfindungsgemäßes Verfahren zur Steuerung der Halbbrücke umfasst Schritte des Ausgebens eines Schließsignals für die erste Schalteinrichtung, während die zweite Schalteinrichtung geöffnet ist, und des Bestimmens einer Latenzzeit zwischen dem Beginn des Schließsignals und einem Einbrechen einer über der ersten Schalteinrichtung anliegenden Spannung. Anschließend wird auf der Basis der bestimmten Latenzzeit eine Totzeit minimiert, die zwischen einem Öffnen der zweiten Schalteinrichtung und einem Schließen der ersten Schalteinrichtung liegt.

Dadurch kann eine dynamische Anpassung der Totzeit innerhalb oder außerhalb eines laufenden Betriebs der Halbbrücke erfolgen. Anders ausgedrückt kann ein durch die Halbbrücke gesteuerter Verbraucher bestromt oder unbestromt sein, während die Totzeit minimiert wird. Insbesondere dann, wenn die Latenzzeit von äußeren Einflüssen abhängig ist, beispielsweise einer Umgebungstemperatur, kann durch das beschriebene Verfahren sichergestellt werden, dass eine optimierte Ansteuerung der Schalteinrichtungen durchgeführt wird, so dass die Totzeit minimiert und eine Verlustleistung reduziert werden. Auch eine elektromagnetische Verträglichkeit (EMV) kann verbessert sein. Umfasst die Schalteinrichtung einen MOSFET, so kann eine Abstrahlung elektromagnetischer Störungen maßgeblich durch eine Bodydiode und parasitäre Induktivitäten des MOSFET bedingt sein. Je kürzer dieser Schwingkreis aktiv ist, desto geringer können elektromagnetische Emissionen ausfallen. Werden die Schalteinrichtungen der Halbbrücke genau genug gesteuert, können gegebenenfalls auch Dämpfungselemente (so genannte Snubber) am MOSFET entfallen.

In einer besonders bevorzugten Ausführungsform wird das Verfahren auch für einen umgekehrten Schaltvorgang eingesetzt. Dazu wird eine weitere Latenzzeit zwischen dem Ende des Schließsignals und einem Ansteigen der über der ersten Schalteinrichtung anliegenden Spannung bestimmt. Auf der Basis der bestimmten weiteren Latenzzeit wird dann eine weitere Totzeit, die zwischen einem Schließen der zweiten Schalteinrichtung und einem Öffnen der ersten Schalteinrichtung liegt, minimiert.

Bevorzugterweise wird während des Minimierens der Totzeit das Schließsignal für die erste Schalteinrichtung mindestens um die vorbestimmte Latenzzeit früher ausgegeben als ein Öffnungssignal für die zweite Schalteinrichtung. Wird das Schließsignal genau um die Latenzzeit vor dem Öffnungssignal für die zweite Schalteinrichtung gegeben, so kann die Totzeit bis auf 0 reduziert werden. Da die Latenzzeit der ersten Schalteinrichtung bekannt ist, kann eine Verringerung der Totzeit in einen negativen Bereich hinein, so dass beide Schalteinrichtungen gleichzeitig geschlossen sind, sicher verhindert werden.

In einer bevorzugten Variante werden die Schalteinrichtungen alternierend geschlossen, um einen mit dem Anschluss verbundenen Verbraucher mittels Pulsweitenmodulation zu steuern. Der Verbraucher kann insbesondere an Bord eines Kraftfahrzeugs vorgesehen sein. Beispielsweise kann der Verbraucher einen Elektromotor oder eine andere elektrische Last umfassen. Die Steuerung eines Verbrauchers an Bord eines Kraftfahrzeugs mittels Pulsweitenmodulation ist verbreitet, so dass das Verfahren dazu beitragen kann, eine Verlustleistung an Bord des Kraftfahrzeugs zu minimieren. So kann dazu beigetragen werden, dass ein Kraftstoffverbrauch oder ein Schadstoffausstoß des Kraftfahrzeugs verringert ist.

In einer weiteren Ausführungsform umfasst das Verfahren ferner Schritte des Ausgebens eines Schließsignals für die zweite Schalteinrichtung, während die erste Schalteinrichtung geöffnet ist, des Bestimmens einer Latenzzeit zwischen dem Beginn des Schließsignals und einem Einbrechen einer über der zweiten Schalteinrichtung anliegenden Spannung, und des Minimierens einer Totzeit, die zwischen einem Öffnen der ersten Schalteinrichtung und einem Schließen der zweiten Schalteinrichtung liegt, auf der Basis der bestimmten Latenzzeit.

Durch eine solchermaßen symmetrische Ausgestaltung des Verfahrens können die Latenzzeiten beider Schalteinrichtungen der Halbbrücke erfasst und die korrespondierenden Totzeiten beim Umschalten der Schalteinrichtungen minimiert werden.

In einer weiteren Ausgestaltung ist eine weitere Halbbrücke mit einem weiteren Anschluss vorgesehen, um einen Verbraucher zwischen Anschlüssen der Halbbrücken zu betreiben, und Schaltelemente unterschiedlicher Halbbrücken werden derart mit Schließsignalen versorgt, dass sie möglichst gleichzeitig schließen. So kann das Verfahren auch zur Ansteuerung einer aus zwei Halbbrücken bestehenden H-Brücke verwendet werden. Es können auch Brückenschaltungen mit mehr als zwei Halbbrücken in entsprechender Weise angesteuert werden.

In besonderer Weise eignet sich das Verfahren für die Steuerung eines kommutierten oder bürstenlosen Elektromotors, wobei zwei, drei oder vier Halbbrücken vorgesehen sein können. Der Elektromotor kann insbesondere einen Antrieb eines Scheibenwischers, eines Fensterhebers oder einer anderen Einrichtung an Bord eines Kraftfahrzeugs bilden.

Durch die Synchronisation der Einschaltzeitpunkte zueinander korrespondierender Schalteinrichtungen kann eine besonders präzise Einstellung der Totzeit erreicht werden. Durch die Verwendung der Halbbrücke kann auch ein Verbraucher angesteuert werden, bei dem eine Stromflussrichtung bedeutsam ist, beispielsweise ein Elektromotor.

In einer bevorzugten Ausführungsform wird das Bestimmen der Latenzzeit periodisch durchgeführt. Dadurch kann die Totzeit an eine sich ändernde Latenzzeit der Schalteinrichtung angepasst werden. Beispielsweise kann die erste Schalteinrichtung einen Feldeffekttransistor umfassen, der eine temperaturabhängige Latenzzeit aufweist. Während eines Betriebs des Feldeffekttransistors in einer sich erwärmenden oder abkühlenden Umgebung kann durch die periodische Bestimmung der Latenzzeit dieser Effekt kompensiert werden.

Ein erfindungsgemäßes Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Eine erfindungsgemäße Steuereinrichtung zur Steuerung einer Halbbrücke mit einer ersten Schalteinrichtung zur Verbindung eines Anschlusses mit einem ersten Potential und einer zweiten Schalteinrichtung zur Verbindung des Anschlusses mit einem zweiten Potential umfasst eine erste Ansteuereinrichtung zur Ausgabe eines Schließsignals an die erste Schalteinrichtung, eine zweite Ansteuereinrichtung zur Ausgabe eines Öffnungssignals an die zweite Schalteinrichtung, einen Komparator zur Bestimmung, dass eine über der ersten Schalteinrichtung anliegende Spannung einbricht, und einen Zeitmesser zur Bestimmung einer Latenzzeit zwischen dem Beginn des Schließsignals, während die zweite Schalteinrichtung geöffnet ist, und einem Einbrechen der Spannung. Dabei ist die erste Ansteuerung dazu eingerichtet, eine Totzeit, die zwischen einem Öffnen der zweiten Schalteinrichtung und einem Schließen der ersten Schalteinrichtung liegt, auf der Basis der bestimmten Latenzzeit zu minimieren.

Dabei können die Schalteinrichtungen insbesondere Feldeffekttransistoren umfassen. Die Feldeffekttransistoren können in die Steuereinrichtung integriert sein. Dadurch kann eine kompakte und leistungsfähige Steuereinrichtung bereitgestellt sein, mittels derer ein Verbraucher mit verringerter Verlustleistung gesteuert werden kann.

Bevorzugterweise sind die Schalteinrichtungen zum Einsatz in einer Umgebung mit stark veränderlicher Temperatur eingerichtet. Eine solche Umgebung kann beispielsweise einen Aktuator, ein Modul oder ein Stellglied an Bord eines Kraftfahrzeugs umfassen.

### Kurze Beschreibung der Figuren

Die Erfindung wird nun mit Bezug auf die beigefügten Figuren genauer beschrieben, in denen:
- Figur 1: ein Schaltbild einer Vorrichtung zur Steuerung einer Halbbrücke;
- Figur 2: ein Schaltbild einer H-Brücke mit der Vorrichtung von Fig. 1;
- Figur 3: ein Ablaufdiagramm eines Verfahrens zur Bestimmung einer Latenzzeit einer Schalteinrichtung in einer der Brücken der Figuren 1 oder 2, und
- Figur 4: ein Ablaufdiagramm eines Verfahrens zur pulsweitenmodulierten Steuerung eines Verbrauchers mittels einer der Vorrichtungen der Figuren 1 oder 2
darstellt.

### Genaue Beschreibung von Ausführungsbeispielen

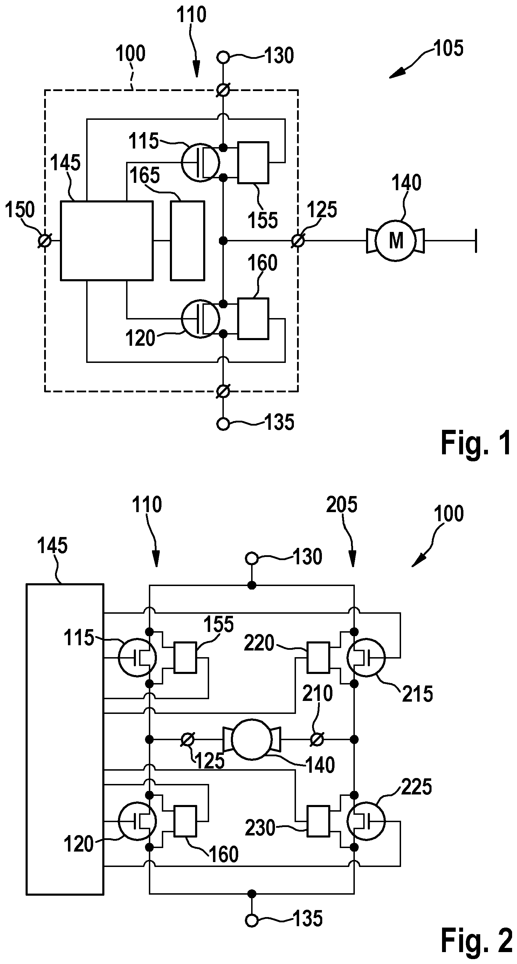

Figur 1 zeigt eine Steuereinrichtung 100 zum Einsatz an Bord eines Kraftfahrzeugs 105. Die Steuereinrichtung 100 ist zur Steuerung einer Halbbrücke 110 eingerichtet, wobei die Halbbrücke 110 in die Steuereinrichtung 100 integriert sein kann. Die Halbbrücke 110 umfasst eine erste Schalteinrichtung 115 und eine zweite Schalteinrichtung 120, die jeweils beispielsweise als Bipolar-Transistoren, IGBTs (Bipolartransistor mit isolierter Gate-Elektrode) für HEV oder EV oder als Feldeffekttransistoren, weiter bevorzugt als MOSFETs ausgeführt sein können. Die erste Schalteinrichtung 115 ist dazu eingerichtet, einen Anschluss 125 mit einem ersten Potential 130 zu verbinden und die zweite Schalteinrichtung 120 ist dazu eingerichtet, den Anschluss 125 mit einem zweiten Potential 135 zu verbinden.

Zwischen dem Anschluss 125 und einem Masseanschluss kann ein Verbraucher 140 mit der Halbbrücke 110 bzw. der Steuereinrichtung 100 verbunden werden. Der Verbraucher 140 kann beispielsweise einen Elektromotor umfassen, insbesondere an Bord eines Kraftfahrzeugs, etwa zur Betätigung eines Scheibenwischers. Zwischen dem ersten Potential 130 und dem zweiten Potential 135 liegt bevorzugterweise das Massepotential.

Zur Ansteuerung der Schalteinrichtungen 115 und 120 ist eine Verarbeitungseinrichtung 145 vorgesehen, die insbesondere als programmierbarer Mikrocomputer ausgeführt sein kann. Bevorzugterweise umfasst die Steuereinrichtung 100 eine Schnittstelle 150, die mit der Verarbeitungseinrichtung 145 verbunden ist, um eine Kommunikation zwischen einer externen Steuerungskomponente und der Steuereinrichtung 100 zu ermöglichen. Ein erster Komparator 155 ist der ersten Schalteinrichtung 115 zugeordnet und stellt der Verarbeitungseinrichtung 145 ein Signal bereit, wenn eine über der ersten Schalteinrichtung 115 anliegende Spannung einbricht. Der erste Komparator 155 kann für ein so genanntes Drain-Source-Monitoring vorgesehen sein, um eine kurzgeschlossene erste Schalteinrichtung 115 im Betrieb zu detektieren. Bevorzugterweise ist der erste Komparator 155 von der Steuereinrichtung umfasst bzw. integriert mit ihr ausgeführt.

Ein zweiter Komparator 160 ist der zweiten Schalteinrichtung 120 zugeordnet und ansonsten so ausgebildet wie der erste Komparator 155. Außerdem ist ein Zeitmesser 165 vorgesehen, der mit der Verarbeitungseinrichtung 145 verbunden ist. Der Zeitmesser 165 kann beispielsweise als programmierbarer Zähler oder Zeitgeber aufgebaut sein. Dabei kann der Zeitmesser 165 durch die Verarbeitungseinrichtung 145 gestartet oder angehalten werden und ein Zählerstand kann gesetzt oder ausgelesen werden. In einer weiteren Ausführungsform kann der Zeitmesser 165 durch eines der Signale der Komparatoren 155 oder 160 gestartet oder angehalten werden.

Die Verarbeitungseinrichtung 145 ist dazu eingerichtet, mittels des Zeitmessers 165 und des ersten Komparators 155 eine Latenzzeit zu bestimmen, die zwischen dem Ausgeben eines Schließsignals an die erste Schalteinrichtung 115 und einem tatsächlichen Schließen der Schalteinrichtung 115 vergeht. Das tatsächliche Schließen ist erkennbar am Einbrechen der über der ersten Schalteinrichtung 115 anliegenden Spannung. Bricht die Spannung ein, so kann der erste Komparator 155 ein entsprechendes Signal an die Verarbeitungseinrichtung 145 oder den Zeitmesser 165 ausgeben. In der dargestellten, bevorzugten Ausführungsform mit dem zweiten Komparator 160 kann eine entsprechende Bestimmung auch für eine Latenzzeit der zweiten Schalteinrichtung 120 durchgeführt werden.

Im vorliegenden Beispiel ist die Verarbeitungseinrichtung 145 dazu eingerichtet, Öffnungssignale an die erste Schalteinrichtung 115 und ggf. die zweite Schalteinrichtung 120 in Abhängigkeit von zuvor bestimmten Latenzzeiten auszugeben, so dass die tatsächlichen Schließzeiten der Schalteinrichtungen 115 und 120 verbessert auf die Öffnungszeiten der jeweils anderen Schalteinrichtungen 115, 120 oder einer anderen, externen Schalteinrichtung abgestimmt werden können. Insbesondere ist die Verarbeitungseinrichtung 145 dazu eingerichtet, den Schalteinrichtungen 115 und 120 alternierend Schließsignale bereitzustellen, um eine Pulsweitenmodulation des Verbrauchers 140 zu realisieren.

Figur 2 zeigt ein Schaltbild der Vorrichtung 100 von Figur 1 in einer anderen Ausführungsform, wobei nicht alle der in Figur 1 dargestellten Elemente auch in Figur 2 dargestellt sind. In der dargestellten Ausführungsform ist zusätzlich zur Halbbrücke 110 eine weitere Halbbrücke 205 vorgesehen, die entsprechend aufgebaut ist und deren herausgeführter weiterer Anschluss 210 mit dem anderen Anschluss des Verbrauchers 140 verbunden ist. Die weitere Halbbrücke 205 umfasst eine dritte Schalteinrichtung 215, der ein dritter Komparator 220 zugeordnet ist, und eine vierte Schalteinrichtung 225, der ein vierter Komparator 230 zugeordnet ist. Die weitere Halbbrücke 205 einschließlich der Komparatoren 220 und 230 sind bevorzugterweise von der Steuereinrichtung 100 umfasst bzw. integriert mit ihr ausgeführt. Der Verbraucher 140 kann insbesondere ein kommutierter oder bürstenloser Elektromotor sein.

In der dargestellten Ausführungsform ist die Verarbeitungseinrichtung 145 vorzugsweise dazu eingerichtet, auch die Latenzzeiten der dritten Schalteinrichtung 215 und der vierten Schalteinrichtung 225 zu bestimmen. Ferner ist die Verarbeitungseinrichtung 145 dazu eingerichtet, die Schalteinrichtungen 115, 120, 215 und 225 in Abhängigkeit der bestimmten Latenzzeiten mit Öffnungssignalen bzw. Schließsignalen zu versehen. Üblicherweise werden jeweils in Figur 2 diagonal versetzt dargestellte Schalteinrichtungen gemeinsam geschlossen oder geöffnet, so dass entweder die Schalteinrichtungen 155 und 225 oder die Schalteinrichtungen 220 und 160 gleichzeitig geschlossen sind. Das Ansteuern der Schalteinrichtungen 155, 160, 220 und 230 um sie zu Öffnen und zu Schließen kann im Rahmen einer Pulsweitenmodulation erfolgen. Die bestimmten Latenzzeiten werden bevorzugterweise so kompensiert, dass Totzeiten zwischen dem Einschalten eines Paars von Schalteinrichtungen 115 und 225 bzw. 120 und 215 und dem Ausschalten des jeweils anderen Paars von Schalteinrichtungen 120 und 215 bzw. 115 und 225 möglichst minimiert werden.

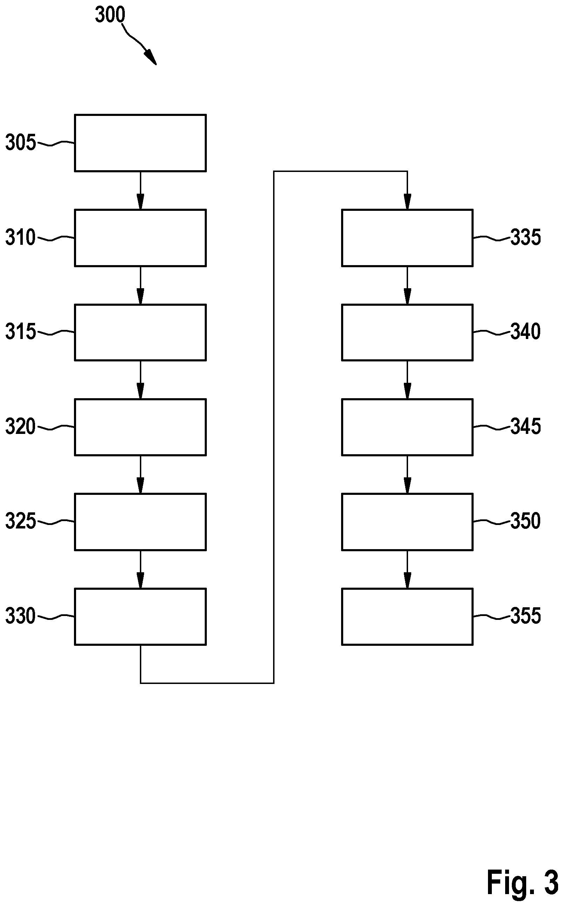

Figur 3 zeigt ein Ablaufdiagramm eines Verfahrens zur Steuerung einer der Halbbrücken 110 oder 205 der Figuren 1 oder 2. Das Verfahren 300 ist insbesondere zum Ablaufen auf der Verarbeitungseinrichtung 145 eingerichtet.

In einem ersten Teil des Verfahrens 300 wird eine Latenzzeit der ersten Schalteinrichtung 115, bestimmt, wobei dieser Abschnitt des Verfahrens 300 auch in entsprechender Weise auf jede andere angesteuerte Schalteinrichtung 120, 215 und 225 angewendet werden kann. In einem ersten Schritt 305 wird die andere Schalteinrichtung der gleichen Halbbrücke 110, 205, im vorliegenden Fall die zweite Schalteinrichtung 120, geöffnet. Dieser Schritt kann entfallen, wenn die andere Schalteinrichtung bereits geöffnet ist. In einem folgenden Schritt 310 wird ein Schließsignal für die erste Schalteinrichtung 115 ausgegeben. Gleichzeitig oder möglichst kurz davor oder danach wird in einem Schritt 315 der Zeitmesser 165 gestartet. Dann wird in einem Schritt 320 erfasst, dass die Spannung über der ersten Schalteinrichtung 115 einbricht. Gleichzeitig oder möglichst kurz danach wird in einem Schritt 325 der Zeitmesser 165 angehalten. In einem Schritt 330 kann dann die Latenzzeit der ersten Schalteinrichtung 115 aus dem Zeitmesser 165 ausgelesen werden. Die Latenzzeit ist die Zeit, die die erste Schalteinrichtung 115 braucht, um auf ein Schließsignal hin das Fließen eines elektrischen Stroms vom ersten Potential 130 zum Anschluss 125 zu ermöglichen.

Damit ist die Bestimmung der Latenzzeit der ersten Schalteinrichtung 115 abgeschlossen. In einem folgenden Abschnitt des Verfahrens 300 kann die bestimmte Latenzzeit dazu verwendet werden, Schaltzeiten der ersten Schalteinrichtung 115 verbessert zu steuern. Dazu wird in einem Schritt 335 ein Zeitpunkt bestimmt, zu dem die erste Schalteinrichtung 115 geschlossen sein soll. Anschließend wird in einem Schritt 340 abgewartet, bis der bestimmte Zeitpunkt minus der bestimmten Latenzzeit eingetreten ist. Dann wird in einem Schritt 345 ein Schließsignal an die erste Schalteinrichtung 115 ausgegeben. Nach Ablauf der Latenzzeit in Schritt 350 ist die Schalteinrichtung 115 im Schritt 355 geschlossen.

In einer besonders bevorzugten Ausführungsform wird das Verfahren 300 in entsprechender Weise auch für den umgekehrten Schaltvorgang eingesetzt, wenn die erste Schalteinrichtung 115 geöffnet und die zweite Schalteinrichtung 110 geöffnet werden sollen. Dazu ist sind obiger Beschreibung die Schalteinrichtungen 115 und 120 und das Ein- bzw. Ausschalten jeweils zu vertauschen. Somit wird eine weitere Latenzzeit zwischen dem Ende des Schließsignals und einem Ansteigen der über der ersten Schalteinrichtung anliegenden Spannung bestimmt und auf der Basis der bestimmten weiteren Latenzzeit wird dann eine weitere Totzeit, die zwischen dem Schließen der zweiten Schalteinrichtung und dem Öffnen der ersten Schalteinrichtung liegt, minimiert. Die unterschiedlichen Durchläufe des Verfahrens 300 können sich abwechseln, beispielsweise im Rahmen einer periodischen Steuerung des Verbrauchers 140.

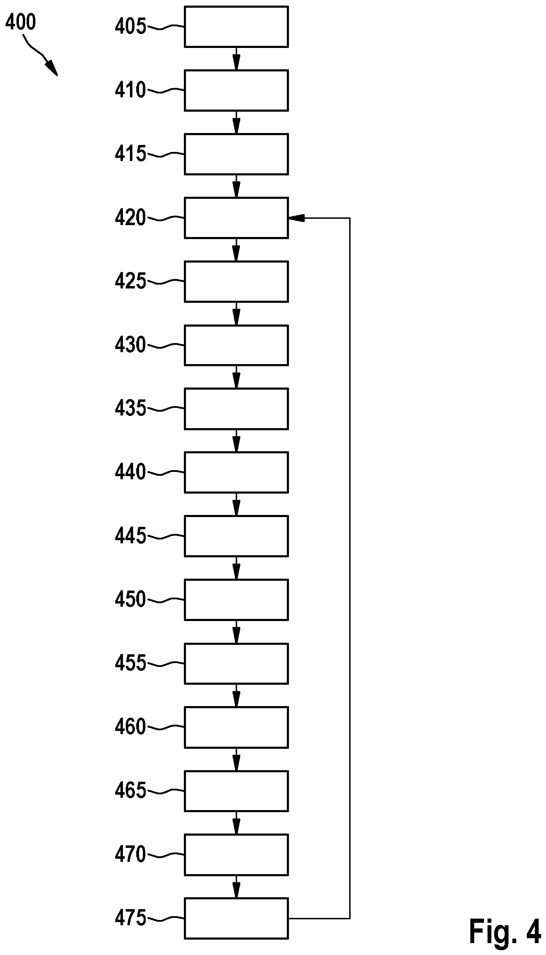

Figur 4 zeigt ein Ablaufdiagramm eines Verfahrens zur pulsweitenmodulierten Steuerung eines Verbrauchers 140 mittels einer der Steuereinrichtungen 100 der Figuren 1 oder 2. Das Verfahren 400 ist ebenfalls zum Ablaufen auf der Verarbeitungseinrichtung 145 eingerichtet. Im Folgenden wird exemplarisch von dem Aufbau von Figur 1 ausgegangen; in entsprechender Weise kann jedoch auch der Aufbau von Figur 2 unterstützt werden, in dem wie oben beschrieben wurde, wie jeweils diagonal versetzt dargestellte Schalteinrichtungen 115, 120, 215 und 225 möglichst gleichzeitig geschlossen bzw. geöffnet werden.

In einem ersten Schritt 405 sind beide Schalteinrichtungen 115 und 120 geöffnet. In einem nachfolgenden Schritt 410 wird ein Schließsignal an die erste Schalteinrichtung 115 ausgegeben. Nach Ablauf der zuvor bestimmten Latenzzeit ist die erste Schalteinrichtung 115 in einem Schritt 415 geschlossen. In einem Schritt 420, der im Zusammenhang mit einer Pulsweitenmodulation auch als On-Phase bezeichnet wird, bleibt die erste Schalteinrichtung 115 geschlossen. In einem anschließenden Schritt 425 wird ein Schließsignal an die zweite Schalteinrichtung 120 ausgegeben, um die On-Phase zu beenden. Außerdem wird in einem Schritt 430 ein Öffnungssignal an die erste Schalteinrichtung 115 ausgegeben. In einem Schritt 435 ist die erste Schalteinrichtung 115 geöffnet. Die zweite Schalteinrichtung 120 ist jedoch aufgrund ihrer Latenzzeit noch nicht geschlossen. Dementsprechend läuft in einem Schritt 440 eine Totzeit ab. Danach ist in einem nachfolgenden Schritt 445 die Totzeit beendet und die zweite Schalteinrichtung 120 gesch lossen.

In einem Schritt 450, der im Bereich einer Pulsweitenmodulation als Off-Phase bezeichnet wird, bleibt die zweite Schalteinrichtung 120 geschlossen. In einem Schritt 455 wird an die erste Schalteinrichtung 115 ein Schließsignal und in einem Schritt 460 ein Öffnungssignal an die zweite Schalteinrichtung 120 ausgegeben. Die zweite Schalteinrichtung 120 öffnet schnell und ist in einem Schritt 465 geöffnet, während die erste Schalteinrichtung 115 wegen ihrer noch nicht abgelaufenen Latenzzeit noch nicht geschlossen ist. Es schließt sich eine weitere Totzeit in einem Schritt 470 an. In einem anschließenden Schritt 475 ist die erste Schalteinrichtung 115 geschlossen und die Totzeit beendet. Die Schaltung befindet sich dann wieder in der On-Phase von Schritt 420 und das Verfahren 400 kann erneut durchlaufen.

## Patentansprüche

1. Verfahren (300, 400) zur Steuerung einer Halbbrücke (110) mit einer ersten Schalteinrichtung (115) zur Verbindung eines Anschlusses (125) mit einem ersten Potential (130) und einer zweiten Schalteinrichtung (120) zur Verbindung des Anschlusses (125) mit einem zweiten Potential (135), wobei das Verfahren (300) folgende Schritte umfasst:
- Ausgeben (310) eines Schließsignals für die erste Schalteinrichtung (115), während die zweite Schalteinrichtung (120) geöffnet ist;
- Bestimmen (330) einer Latenzzeit zwischen dem Beginn (310) des Schließsignals und einem Einbrechen (320) einer über der ersten Schalteinrichtung (115) anliegenden Spannung, wobei eine elektrische Spannung mittels eines ersten Komparators (155) über der ersten Schalteinrichtung (115) messtechnisch ermittelt und mittels eines Zeitmessers (165) ausgewertet wird,
- **gekennzeichnet durch**
- Bestimmen eines Zeitpunkts, zu dem die erste Schalteinrichtung (115) geschlossen werden soll und
- Ausgeben (340, 345) eines Schließsignals an die erste Schalteinrichtung (115), zum bestimmten Zeitpunkt minus der bestimmten Latenzzeit;
- wobei der Zeitpunkt feinem Öffnen der zweiten Schalteinrichtung (120) entspricht, um eine Totzeit, die zwischen dem Öffnen der zweiten Schalteinrichtung (120) und einem Schließen (355) der ersten Schalteinrichtung (115) liegt, auf der Basis der bestimmten Latenzzeit zu minimieren;
- wobei während des Betriebs der Halbbrücke (100) Latenzzeiten für jede Schalteinrichtung (115,120) individuell ermittelt werden.

2. Verfahren (300, 400) nach Anspruch 1, wobei eine weitere Latenzzeit zwischen dem Ende des Schließsignals und einem Ansteigen der über der ersten Schalteinrichtung (115) anliegenden Spannung bestimmt wird und eine weitere Totzeit, die zwischen einem Schließen der zweiten Schalteinrichtung (120) und einem Öffnen der ersten Schalteinrichtung (115) liegt, auf der Basis der bestimmten weiteren Latenzzeit minimiert wird.

3. Verfahren (300, 400) nach Anspruch 1 oder 2, wobei während des Minimierens der Totzeit das Schließsignal für die erste Schalteinrichtung (115) mindestens um die vorbestimmte Latenzzeit früher ausgegeben wird (345) als ein Öffnungssignal für die zweite Schalteinrichtung (120).

4. Verfahren (300, 400) nach einem der vorangehenden Ansprüche, wobei die Schalteinrichtungen (115, 120) alternierend geschlossen werden, um einen mit dem Anschluss verbundenen Verbraucher (140) mittels Pulsweitenmodulation zu steuern.

5. Verfahren (300, 400) nach einem der vorangehenden Ansprüche, ferner folgende Schritte umfassend:
- Ausgeben (310) eines Schließsignals für die zweite Schalteinrichtung (120), während die erste Schalteinrichtung (115) geöffnet ist;
- Bestimmen (330) einer Latenzzeit zwischen dem Beginn (310) des Schließsignals und einem Einbrechen (320) einer über der zweiten Schalteinrichtung (120) anliegenden Spannung, und
- Minimieren (335,355) einer Totzeit, die zwischen einem Öffnen der ersten Schalteinrichtung und einem Schließen (355) der zweiten Schalteinrichtung (120) liegt, auf der Basis der bestimmten Latenzzeit.

6. Verfahren (300, 400) nach einem der vorangehenden Ansprüche, wobei das Bestimmen (305-330) der Latenzzeit periodisch durchgeführt wird.

7. Computerprogrammprodukt mit Programmcodemitteln zur Durchführung des Verfahrens (300, 400) nach einem der vorangehenden Ansprüche, wenn das Computerprogrammprodukt auf einer Verarbeitungseinrichtung (145) abläuft oder auf einem computerlesbaren Datenträger gespeichert ist.

8. Steuereinrichtung (100) zur Steuerung einer Halbbrücke (110) mit einer ersten Schalteinrichtung (115) zur Verbindung eines Anschlusses (125) mit einem ersten Potential (130) und einer zweiten Schalteinrichtung (120) zur Verbindung des Anschlusses (125) mit einem zweiten Potential (135), wobei die Steuereinrichtung (100) folgendes umfasst:
- eine erste Ansteuereinrichtung (145) zur Ausgabe eines Schließsignals an die erste Schalteinrichtung (115);
- eine zweite Ansteuereinrichtung (145) zur Ausgabe eines Öffnungssignals an die zweite Schalteinrichtung (120);
- einen Komparator (115) zur Bestimmung, dass eine über der ersten Schalteinrichtung (115) anliegende Spannung einbricht;
- einen Zeitmesser (165) zur Bestimmung einer Latenzzeit zwischen dem Beginn des Schließsignals und einem Einbrechen der Spannung, während die zweite Schalteinrichtung (120) geöffnet ist,
- **dadurch gekennzeichnet, dass**
- die erste Ansteuereinrichtung (145) dazu eingerichtet ist, einen Zeitpunkt zu bestimmen, zu dem die erste Schalteinrichtung (115) geschlossen sein soll und
- ein Schließsignal an die erste Schalteinrichtung (115) zum bestimmten Zeitpunkt minus der bestimmten Latenzzeit auszugeben, sodass eine Totzeit, die zwischen einem Öffnen der zweiten Schalteinrichtung (120) und einem Schließen der ersten Schalteinrichtung (115) liegt, auf der Basis der bestimmten Latenzzeit minimiert ist, wobei während des Betriebs der Halbbrücke (110) Latenzzeiten für die Schalteinrichtungen (115, 120) individuell ermittelbar sind.

9. Steuereinrichtung (100) nach Anspruch 8, wobei die Schalteinrichtungen (115, 120) Feldeffekttransistoren umfassen.

10. Steuereinrichtung nach Anspruch 8 oder 9, wobei die Schalteinrichtungen (115, 120) zum Einsatz in einer Umgebung (105) mit stark veränderlicher Temperatur eingerichtet sind.

## Claims

1. Method (300, 400) for controlling a half-bridge (110) having a first switching device (115) for connecting a connection (125) to a first potential (130) and a second switching device (120) for connecting the connection (125) to a second potential (135), wherein the method (300) comprises the following steps:
- outputting (310) a close signal for the first switching device (115) while the second switching device (120) is open;
- determining (330) a latency between the beginning (310) of the close signal and a dip (320) in a voltage applied across the first switching device (115), wherein a voltage is ascertained metrologically by means of a first comparator (155) via the first switching device (115) and is evaluated by means of a timer (165),
- **characterized by**
- determining a time at which the first switching device (115) is intended to be closed; and
- outputting (340, 345) a close signal to the first switching device (115) at the determined time minus the determined latency;
- wherein the time corresponds to an opening of the second switching device (120) in order to minimize a dead time between the opening of the second switching device (120) and a closing (355) of the first switching device (115) based on the determined latency;
- wherein latencies for each switching device (115, 120) are ascertained individually during operation of the half-bridge (100).

2. Method (300, 400) according to Claim 1, wherein a further latency between the end of the close signal and an increase in the voltage applied across the first switching device (115) is determined and a further dead time between a closing of the second switching device (120) and an opening of the first switching device (115) is minimized based on the determined further latency.

3. Method (300, 400) according to Claim 1 or 2, wherein, during minimization of the dead time, the close signal for the first switching device (115) is output (345) at least by the predetermined latency earlier than an open signal for the second switching device (120).

4. Method (300, 400) according to one of the preceding claims, wherein the switching devices (115, 120) are closed alternately in order to control a consumer (140), which is connected to the connection, by means of pulse-width modulation.

5. Method (300, 400) according to one of the preceding claims, further comprising the following steps:
- outputting (310) a close signal for the second switching device (120) while the first switching device (115) is open;
- determining (330) a latency between the beginning (310) of the close signal and a dip (320) in a voltage applied across the second switching device (120), and
- minimizing (335, 355) a dead time between an opening of the first switching device and a closing (355) of the second switching device (120) based on the determined latency.

6. Method (300, 400) according to one of the preceding claims, wherein the determination (305-330) of the latency is carried out periodically.

7. Computer program product comprising program code means for carrying out the method (300, 400) according to one of the preceding claims when the computer program product runs on a processing device (145) or is stored on a computer-readable data storage medium.

8. Control device (100) for controlling a half-bridge (110) having a first switching device (115) for connecting a connection (125) to a first potential (130) and a second switching device (120) for connecting the connection (125) to a second potential (135), wherein the control device (100) comprises the following:
- a first actuation device (145) for outputting a close signal to the first switching device (115);
- a second actuation device (145) for outputting an open signal to the second switching device (120);
- a comparator (115) for determining that a voltage applied across the first switching device (115) dips;
- a timer (165) for determining a latency between the beginning of the close signal and a dip in the voltage while the second switching device (120) is open,
- **characterized in that**
- the first actuation device (145) is configured to determine a time at which the first switching device (115) is intended to be closed and
- to output a close signal to the first switching device (115) at the determined time minus the determined latency such that a dead time between an opening of the second switching device (120) and a closing of the first switching device (115) is minimized based on the determined latency, wherein latencies for the switching devices (115, 120) are able to be ascertained individually during operation of the half-bridge (110).

9. Control device (100) according to Claim 8, wherein the switching devices (115, 120) comprise field-effect transistors.

10. Control device according to Claim 8 or 9, wherein the switching devices (115, 120) are configured for use in an environment (105) with a greatly varying temperature.

## Revendications

1. Procédé (300, 400) de commande d'un demi-pont (110) comprenant un premier dispositif de commutation (115) destiné à relier une borne (125) à un premier potentiel (130) et un deuxième dispositif de commutation (120) destiné à relier la borne (125) à un deuxième potentiel (135), le procédé (300) comprenant les étapes suivantes :
- délivrance (310) d'un signal de fermeture pour le premier dispositif de commutation (115) pendant que le deuxième dispositif de commutation (120) est ouvert ;
- détermination (330) d'un temps de latence entre le début (310) du signal de fermeture et un effondrement (320) d'une tension appliquée aux bornes du premier dispositif de commutation (115), une tension électrique étant identifiée de manière métrologique aux bornes du premier dispositif de commutation (115) au moyen d'un premier comparateur (155) et interprétée au moyen d'un chronomètre (165),
- **caractérisé par**
- la détermination d'un instant auquel le premier dispositif de commutation (115) doit être fermé ; et
- la délivrance (340, 345) d'un signal de fermeture au premier dispositif de commutation (115) à l'instant déterminé moins le temps de latence déterminé ;
- l'instant correspondant à une ouverture du deuxième dispositif de commutation (120),
en vue de réduire au minimum, sur la base du temps de latence déterminé, un temps mort qui se situe entre l'ouverture du deuxième dispositif de commutation (120) et une fermeture (355) du premier dispositif de commutation (115) ;
- les temps de latence étant identifiés individuellement pour chaque dispositif de commutation (115, 120) pendant le fonctionnement du demi-pont (100).

2. Procédé (300, 400) selon la revendication 1, un temps de latence supplémentaire entre la fin du signal de fermeture et une montée de la tension appliquée aux bornes du premier dispositif de commutation (115) étant déterminé et un temps mort supplémentaire, qui se situe entre une fermeture du deuxième dispositif de commutation (120) et une ouverture du premier dispositif de commutation (115), étant réduit au minimum sur la base du temps de latence supplémentaire déterminé.

3. Procédé (300, 400) selon la revendication 1 ou 2, pendant la réduction au minimum du temps mort, le signal de fermeture pour le premier dispositif de commutation (115) étant délivré (345) plus tôt d'au moins le temps de latence prédéterminé qu'un signal d'ouverture pour le deuxième dispositif de commutation (120).

4. Procédé (300, 400) selon l'une des revendications précédentes, les dispositifs de commutation (115, 120) étant fermés en alternance en vue de commander un récepteur (140) raccordé à la borne au moyen d'une modulation d'impulsions en largeur.

5. Procédé (300, 400) selon l'une des revendications précédentes, comprenant en outre les étapes suivantes :
- délivrance (310) d'un signal de fermeture pour le deuxième dispositif de commutation (120) pendant que le premier dispositif de commutation (115) est ouvert ;
- détermination (330) d'un temps de latence entre le début (310) du signal de fermeture et un effondrement (320) d'une tension appliquée aux bornes du deuxième dispositif de commutation (120), et
- réduction au minimum (335, 355), sur la base du temps de latence déterminé, d'un temps mort qui se situe entre une ouverture du premier dispositif de commutation et une fermeture (355) du deuxième dispositif de commutation (120).

6. Procédé (300, 400) selon l'une des revendications précédentes, la détermination (305-330) du temps de latence étant effectuée périodiquement.

7. Produit de programme informatique comprenant des moyens de code de programme destinés à mettre en oeuvre le produit de programme informatique lorsque le procédé (300, 400) selon l'une des revendications précédentes le produit de programme informatique est exécuté sur un dispositif de traitement (145) ou est enregistré sur un support de données lisible par ordinateur.

8. Dispositif de commande (100) destiné à commander un demi-pont (110) comprenant un premier dispositif de commutation (115) destiné à relier une borne (125) à un premier potentiel (130) et un deuxième dispositif de commutation (120) destiné à relier la borne (125) à un deuxième potentiel (135), le dispositif de commande (100) comprenant les éléments suivants :
- un premier dispositif d'excitation (145) destiné à délivrer un signal de fermeture au premier dispositif de commutation (115) ;
- un deuxième dispositif d'excitation (145) destiné à délivrer un signal d'ouverture au deuxième dispositif de commutation (120) ;
- un comparateur (115) destiné à déterminer qu'une tension appliquée aux bornes du premier dispositif de commutation (115) s'effondre ;
- un chronomètre (165) destiné à déterminer un temps de latence entre le début du signal de fermeture et un effondrement de la tension pendant que le deuxième dispositif de commutation (120) est ouvert,
- **caractérisé en ce que**
- le premier dispositif d'excitation (145) est conçu pour déterminer un instant auquel le premier dispositif de commutation (115) doit être fermé, et
- délivrer au premier dispositif de commutation (115) un signal de fermeture à l'instant déterminé moins le temps de latence déterminé, de sorte qu'un temps mort qui se situe entre l'ouverture du deuxième dispositif de commutation (120) et une fermeture du premier dispositif de commutation (115) soit réduit au minimum sur la base du temps de latence déterminé, les temps de latence pouvant être identifiés individuellement pour les dispositifs de commutation (115, 120) pendant le fonctionnement du demi-pont (100).

9. Dispositif de commande (100) selon la revendication 8, les dispositifs de commutation (115, 120) comprenant des transistors à effet de champ.

10. Dispositif de commande selon la revendication 8 ou 9, les dispositifs de commutation (115, 120) étant conçus pour une utilisation dans un environnement (105) à température fortement variable.
